# EUROPÄISCHE PATENTSCHRIFT

(11) **EP 2 694 186 B1**
(45) Veröffentlichungstag und Bekanntmachung des Hinweises auf die Patenterteilung: **26.05.2021**
(21) Anmeldenummer: 12722276.8
(22) Anmeldetag: 09.02.2012
(51) Int. Cl.: B01D 47/06, E21C 35/22, B01D 46/52, B01D 46/00, E21F 5/20

(54) **NASSWÄSCHER MIT REDUZIERTEN ENERGIEBEDARF ERFORDERNDEM KOMPAKTDEMISTER**
WET SCRUBBER HAVING A COMPACT DEMISTER THAT REQUIRES REDUCED ENERGY DEMAND
ÉPURATEUR PAR VOIE HUMIDE COMPORTANT UN SÉPARATEUR DE GOUTTES À CONSOMMATION D'ÉNERGIE RÉDUITE

(30) Priorität: 07.04.2011 DE 102011016289
(43) Veröffentlichungstag der Anmeldung: 12.02.2014
(73) Patentinhaber: CFT GmbH Compact Filter Technic, 45964 Gladbeck (DE)
(72) Erfinder: BOTH, Reinhold, 45889 Gelsenkirchen (DE); HAUBOLD, Christian, 45964 Gladbeck (DE)
(74) Vertreter: Schulte & Schulte
(86) Internationale Anmeldenummer: PCT/DE2012/000127
(87) Internationale Veröffentlichungsnummer: WO 2012/136177

(56) Entgegenhaltungen:
- WO-A2-00/64561
- WO-A2-2008/099323
- BE-A- 587 693
- DE-A1- 2 348 269
- DE-A1- 3 213 642
- DE-A1-102004 012 967
- GB-A- 2 088 743
- US-A- 2 989 145
- US-A- 5 178 654

## Beschreibung

Die Erfindung betrifft einen Nasswäscher für den Einsatz im untertägigen Berg- und Tunnelbau im Rahmen der Staubbekämpfung, mit einem Wäschergehäuse mit zugeordnetem Lüfter und einem mit Befeuchtungsdüsen und einem Filterpaket versehenen Demister sowie nachgeordnetem Tropfenfänger und Wassertank mit ventilgesteuertem Frischwasserzulauf für Kreislaufwasser.

Ein solcher Nasswäscher ist grundsätzlich aus der DE 198 53 190 A1 bekannt. Bei diesem Nasswäscher ist der notwendige Lüfter zwischen der Eingangs- und der Ausgangsseite vor dem Demister und dem Tropfenfänger angeordnet. Um die notwendige Be- bzw. Durchfeuchtung des Staubes zu gewährleisten, ist sowohl der Demister, der annähernd waagerecht im Luftstrom hängend angeordnet ist, wie auch das Lüfterrad mit zugeordneten Befeuchtungsdüsen versehen. Dadurch wird das Lüfterrad stark vom Staub und auch den Wassertropfen belastet. Nach der DE 103 26 601.1 A1 wird ein als Nasswäscher ausgebildeter Entstauber mit einem schräg stehend angeordneten Demister versehen, der ein Stahlwollepaket umfassend aufgebaut ist und dadurch eine optimale Durchfeuchtung bzw. Benetzung der staubhaltigen Rohluft sicherstellt. Darüber hinaus sind die Befeuchtungsdüsen als intensiv wirkende Mehrstrahldüsen ausgebildet. Schließlich wird der Lüfter in einem eigenen Lüftergehäuse untergebracht, das an das Entstaubergehäuse hinter dem Tropfenfänger angebaut ist. Das gesamte Entstaubergehäuse und auch das Lüftergehäuse sind durch Schalldämpfer schallisoliert. Nachteilig bei diesen bekannten als Nasswäscher ausgebildeten Entstaubern ist, dass die zum Einsatz kommenden Demister relativ schwer sind, also ein hohes Gewicht aufweisen und damit nur mit entsprechend großem Aufwand zu montieren sind. Die Montage wird darüber hinaus noch dadurch erschwert, dass bei beengten Verhältnissen die relativ groß bauenden Demister nicht ohne weiteres in das Wäschergehäuse einzusetzen sind. Darüber hinaus ist schwierig und nachteilig, dass das im Demister eingesetzte Filtermaterial, vor allem Stahlwolle, aufgrund der dichten Anordnung und des langen Durchströmungsweges einen hohen Energiebedarf aufweist. Aus der DE 32 13 642 A1 ist ein Naschwäscher bekannt, der über zwei v-förmige Behälter verfügt, die jeweils zwei sich schneidende Filteroberflächen aufweisen, die geneigt angeordnet sind. Über vor der Öffnung der v-förmigen Behälter angeordnete Wasserdüsen wird Flüssigkeit in die Behälter auf die staubhaltigen Wetter und die Filteroberfläche gedüst. Die feinen Staubteile werden von einem aktiven Filterteil aufgefangen, das über ein gekantetes steifes Rückenstützteil entsprechend geformt wird. Diese schräg stehenden Filterteile sollen die Arbeitsfläche des Filterelementes vergrößern. Über den Aufbau des aktiven Filterteils finden sich keinerlei Hinweise in dieser Schrift. In der DE 23 48 269 A1 ist eine Filtermatte beschrieben, die dafür sorgen soll, dass die Wassertropfen agglomerieren und mit benachbarten Fäden der Filtermatte zugeordneten Wassertropfen eine Art zusammenhängenden Flüssigkeitskörper bilden. Dieser Film soll das Niederschlagen der Staubteilchen begünstigen. Eine Lösung zur Verbesserung des Staubniederschlages ist nicht beschrieben. Aus der US 5 178 654 A ist ein Wäscher mit Demister bekannt, der mit in einen Rahmen eingespannten Stahlwollefäden oder Streckmetallstreifen ausgerüstet ist. Diesem eigentlichen Demister mit den Fäden sind v-förmige Teile versetzt zueinander vor- und nachgeordnet, die als Grobsieb und Niederschlagsfläche für den Schlamm dienen sollen. Der Demister selbst ist somit in seiner Form nicht verändert. Die Filterplatte nach der GB 2 088 743 A besteht aus einem nichtrostenden Stahlgewirke, also einem Stoff, der durch Maschenbildung auf einer Wirkmaschine hergestellt worden ist. Die die Filterplatte bildende gewirkte Stoffbahn ist mehrere Tüten bildend angeordnet, um sowohl die Arbeitsfläche des Filters zu vergrößern und den Staub aus den Wettern herauszunehmen. Ein aus der BE 587 693 A bekannter schirmförmiger Feuchtfilter wird über sogenannte transversale Balken so abgestützt, dass er nicht ausbeulen kann. Auch die WO 2008/099 323 A2 zeigt keinen Demister, sondern mehrere schräg zueinander in einem Gerüst angeordnete Filterkörper, die von oben nach unten nacheinander von dem staubhaltigen Medium durchdrungen werden. Gegenstand der WO 00/64561 A2 ist eine Vorrichtung zum Abscheiden von fein verteilten Flüssigkeits- und/oder Festkörperteilchen aus einem Gasstrom. Hier ist lediglich ein Gitter beschrieben, das mehrlagig ausgebildet und mit Sicken versehen ist, um im sickentiefsten Ablaufbleche anordnen zu können. Das Gitter dient zum Auffangen und Ableiten der Staub- oder auch der Gasteilchen. Auch die US 2 989 145 A beschreibt ein Verfahren und eine Vorrichtung, mit der man eine bestimmte Drahtnetzkonstruktion herstellen kann, die offenbar durch Verformungen gestärkt werden soll.

Der Erfindung liegt daher die Aufgabe zu Grunde, einen gut montier- und demontierbaren, möglichst energiearmen Nasswäscher zu schaffen.

Die Aufgabe wird gemäß der Erfindung dadurch gelöst, dass der Demister einen Stützrahmen und darin im Abstand angeordnete Stützgitter aufweist, zwischen die als Filtermaterial Stahlgewebe oder Stahlgeflecht oder Stahlwolle oder Streckmetalllagen, ein kompaktes Filterpaket darstellend, eingebracht ist, wobei die Stützgitter und damit auch das Filtermaterial/Filterpaket ein wellenförmig gebogenes oder gekantetes Gesamtpaket ergebend ausgebildet sind.

Bei Einsatz eines derartigen Demisters kann überraschend ein sehr schmal bauendes Filterpaket im Demister eingesetzt werden, weil die notwendige Oberfläche durch die wellenförmige Ausbildung des Gesamtpaketes zur Verfügung gestellt werden kann, ohne dass es eine entsprechend große Dicke und damit ein entsprechend großes Gewicht haben muss. Ein solcher Demister trägt somit sowohl zu einer Gewichtsreduzierung des gesamten Nasswäschers bei, wie auch zu einem besseren Durchfeuchtungseffekt des mit den Wettern anströmenden Staubes, sodass der Reinigungseffekt deutlich gesteigert werden kann. Ein solch entsprechend schmal ausgebildeter Demister kann darüber hinaus vorteilhaft sicher in das Wäschergehäuse eingesetzt werden, sodass eine Montage auch in beengten Streckenverhältnissen sicher möglich ist. Vor allem aber durchströmen die Wetter den Demister mit weniger Energieaufwand, weil das "dünnere" Filterpaket weniger Widerstand bedeutet. Der Demister, also das Aggregat, das für die richtige Durchfeuchtung und Niederschlagung des Staubes Sorge trägt, weist einen Stützrahmen und darin im Abstand angeordnete Stützgitter auf, zwischen die als Filtermaterial Stahlwolle oder ein Stahlgewebe, Stahlgeflecht oder Streckmetalllagen paketförmig eingebracht ist, wobei die Stützgitter und damit auch das Filtermaterial das wellenförmig gebogene und gekantete Gesamtpaket ergeben. Ein solches gekantetes oder gebogenes Gesamtpaket ergibt ein vorteilhaftes Kompaktelement, das nicht nur gut montierbar ist, sondern das auch über die notwendige Stabilität verfügt, wenn entsprechende Wettermengen mit hoher Geschwindigkeit auf bzw. in das Filterpaket hineingeführt werden. Da eine Stahlwolle oder -gewebe oder - geflecht, das als solches auch in bekannten Demistern eingesetzt wurde, nur mit Aufwand ein Paket ergebend gefaltet oder geformt werden könnte, ist es vorteilhaft, das Stützgitter, das das Filtermaterial umgibt, zu verformen und damit dem Filtermaterial nach dem Einschieben gleich die notwendige Wellenform zu geben. Es ist auch möglich, das Filterpaket mit den Stützgittern zusammen entsprechend zu verformen.

Das aus Stahlwolle-, Stahlgewebe-, Stahlgeflecht- oder Streckmetalllagen bestehende Filterpaket sorgt aufgrund dieser Materialien dafür, dass der mit den staubhaltigen Wettern in den Nasswäscher hineingebrachte Staub richtig durchnässt und dann mit dem Wasser zusammen als Schlamm abgeführt wird. Durch diese Formgebung des Filterpaketes und die damit größere dem Wetterstrom zur Verfügung stehende Benetzungsfläche kann das Filterpaket insgesamt wesentlich schmaler bauen und erzeugt damit einen geringeren Druckverlust.

Die Montagefreundlichkeit ist ein wesentlicher Vorteil des neuartigen Demisters. Eine Optimierung wird weiter dadurch erreicht, dass der Demister mehrteilig ausgebildet ist, wobei zwei oder mehrere Gesamtpakete quer zur Wetterrichtung aneinandergefügt ins Wäschergehäuse eingebracht und über die zu schließende Gehäusetür zusammengefügt und -gepresst sind. Damit sind kleinere und geringere Abmessungen aufweisende Einzelelemente vorgegeben, die natürlich besser transportiert und gleichzeitig damit auch besser im Wäschergehäuse untergebracht werden können. Je nach Einsatzort ist es möglich zwei, drei oder auch vier solcher Gesamtpakete nacheinander im Wäschergehäuse unterzubringen und damit eine Gesamteinheit zu schaffen, die den notwendigen Auflagen genügt, d. h. die entsprechende Wettermengen vom mitgebrachten Staub befreien können. Diese kleinen Gesamtpakete können dann in das Wäschergehäuse eingeschoben und dann durch die zu schließende Tür so aneinander gepresst werden, dass die zu reinigenden Wetter mit der notwendigen Sicherheit auch durch die Filterpakete geleitet werden, also auch benetzt und gereinigt werden. Denkbar ist es, dass zwischen die Stützrahmen Gummidichtungen gesetzt werden, um so eine absolute Dichtigkeit zu schaffen. In der Regel wird es aber ausreichend sein, wenn einfach Metall auf Metall gepresst wird.

Das im Demister befeuchtete Staubmaterial wird zusammen mit dem von den Düsen erzeugten Wassernebel als schlammhaltiges Wasser aus dem Demister ausgetragen. Um zu verhindern, dass Schlammwasser in zu großen Mengen vom Demister aus in den Tropfenfänger gelangen, ist vorgesehen, dass die vom Stützgitter und dem Filtermaterial gebildeten Wellen von Gehäuseseitenwand zu Gehäuseseitenwand verlaufend ausgeführt sind, sodass dementsprechend die Wellenkämme vom Teilgehäuseboden zum Teilgehäusedeckel bzw. umgekehrt verlaufen. Diese Wellenform bzw. besser gesagt die Wellenrichtung erleichtert das Abtropfen des schlammhaltigen Wassers in Richtung Teilgehäuseboden, sodass dieses dann auch problemlos weitertransportiert werden kann und erst gar nicht in den Tropfenfänger gelangt.

Das Abtropfen des schlammhaltigen Wassers vom Demister wird dadurch weiter begünstigt, dass der Demister mit seinem wellenförmig ausgebildeten Gesamtpaket so im Wäschergehäuse angeordnet ist, dass der untere Rahmenrand weiter in Richtung Tropfenfänger weist als der obere Rahmenrand. Bei dieser von der Waagerechten abweichenden Positionierung kann das schlammhaltige Wasser am Demister, d. h. insbesondere auch dem Filterpaket aus Stahlwolle oder Ähnlichem langsam aber sicher nach unten ablaufen, wobei die o. g. Neigung optimal ist, d. h. wenn der untere Demisterrand weiter in Richtung Tropfenfänger weist als der obere Rand.

Weiter wird das Ablaufen des schlammhaltigen Wassers in Richtung Tropfenfänger, wo der Schmutzwasserablauf ist, dadurch begünstigt, dass der Demister ein Bodenblech aufweist, das in Richtung Tropfenfänger schräg gestellt ist, dem ein Schmutzwasserablauf zugeordnet ist. Da vom Tropfenfänger auch noch schmutzhaltiges Wasser oder auch mehr oder weniger sauberes Wasser abläuft, kann das gesamte Ablaufwasser oder Schmutzwasser am letzten Punkt, also dem Tropfenfänger aufgefangen und gesammelt abgeführt werden. Es gelangt von hier in den Wassertank, wo eine Reinigung stattfindet, sodass das Wasser im Kreislauf geführt werden kann.

Vorgesehen ist, dass die Befeuchtungsdüsen mit der Düsenöffnung zum Demister und damit in Wetterrichtung weisend und in einem eine vollständige Abdeckung der Oberfläche ergebenden Abstand zur Oberfläche angeordnet sind. Die von den Befeuchtungsdüsen erzeugten Nebelkegel sind so ausgebildet, dass sie einander auf der Oberfläche des Demisters überlappen, sodass auf jeden Fall jeder Teilbereich des Demisters bzw. der Demisteroberfläche auch wirklich so befeuchtet wird, dass die auftreffenden Staubkörner eingebunden werden und dann abgeleitet werden können.

Weiter vorne ist darauf hingewiesen worden, dass das staubhaltige Schmutzwasser einem Wassertank zugeführt wird, um dort "aufbereitet" zu werden. Dies ist dann besonders effektvoll, wenn der Wassertank eine oder mehrere Kaskaden aufweist, dass der Tankboden in Richtung Schlammablauf schräg gestellt ist und dass dem Schmutzwasserzulauf ein Schlammvorabscheider, vorzugsweise ein Hydrozyklon zugeordnet ist. Bevor das Wasser überhaupt in den Wassertank hineingelangt, durchläuft es einen Hydrozyklon, sodass bereits eine größere Menge an Staubpartikeln, also an Schlamm abgeschieden werden kann, bevor der Rest in die erste Kaskade des Wassertanks hineingelangt. Über die hintereinander angeordneten Kaskaden wird erreicht, dass das verbliebene Schmutzwasser sich beruhigt, sodass die Schlammpartikel auf den Tankboden absinken und dann automatisch in Richtung Schlammablauf rutschen, wo sie diskontinuierlich absaugt oder abgeführt werden. Hierzu ist vorteilhaft, dass der Tankboden entsprechend schräg gestellt ist. Insgesamt gesehen ist es so möglich, das stark schlammhaltige Wasser so weit aufzubereiten, dass es anschließend über die vorhandenen Befeuchtungsdüsen wieder erneut auf die staubhaltigen Wetter aufgedüst werden kann. Diese ganze Aufbereitung des schlammhaltigen Wassers ist von Vorteil, weil gerade untertage die ansonsten großen anfallenden Wassermengen nur mit erheblichen Problemen abgeführt und entsorgt werden können. Der Schlamm dagegen kann in der Regel ohne großen Aufwand entsorgt oder weiterverarbeitet werden.

Da nicht immer vermieden werden kann, dass in der letzten Kaskade noch Schlammflocken oder Ähnliches anfallen, ist es von Vorteil, wenn der Wassertank einen Reinwasserablauf mit Pumpe und einen in die letzte Kaskade hineinreichenden Ansauger aufweist, wobei der Zulauf des Ansaugers über ein feinmaschiges Drahtgewebe abgedeckt ist. In diesem Drahtgewebe werden diese Schlammflocken festgehalten, sodass damit wirklich weitgehend gereinigtes Wasser über die Pumpe weiterbefördert wird. Ein solches Drahtgewebe kann bei Bedarf auch ohne großen Aufwand gereinigt werden, wobei dies in der Regel über Rückspülungsmaßnahmen vorgenommen wird.

Mehrfach ist erwähnt worden, dass die in den Abmessungen vorteilhaften Gesamtpakete gut montiert und auch transportiert werden können. Dies wird noch dadurch begünstigt, dass der Stützrahmen mit über das Gesamtpaket oder die Gesamtpakete überstehenden Handgriffen ausgerüstet ist, die beiden Längsseiten zugeordnet sind. Es stehen somit pro Gesamtpaket vier Handgriffe zur Verfügung, sodass beim Montieren nicht der eigentliche Stützrahmen angefasst werden muss, sondern nur die besagten Handgriffe.

Die Erfindung zeichnet sich insbesondere dadurch aus, dass ein gut montier- und auch demontierbarer Nasswäscher bzw. dafür vorgesehener Demister zur Verfügung gestellt wird, der darüber hinaus wenig energieintensiv ist, weil ein Demister zur Verfügung gestellt ist, der ein sehr schmal bauendes Filterpaket aus ansonsten schwer verformbaren Stahlwolle- Stahlgewebe- oder Stahlgeflechtmaterial aufweist, das gefaltet oder auf jeden Fall wellenförmig ausgebildet ist, sodass eine große Kontaktfläche zur Verfügung steht, um die anströmenden Staubpartikel durch das ausgedüste Wasser zu benetzen und zu binden. Die Erfindung zeichnet sich weiter dadurch aus, dass der Demister unterteilt sein kann, um so trotz kleiner Einzelteile durch den Einsatz mehrerer "kleiner" Gesamtpakete die notwendigen Abmessungen für einen Nasswäscher zu erreichen. Solche kleinen Gesamtpakete können nicht nur gut transportiert werden, sondern sie sind gut auch unter beengten Verhältnissen beispielsweise in untertägigen Strecken montier- und demontierbar.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Nasswäscher, teilweise mit geöffneten Seitenbereichen,
- Figur 2: eine Vorderansicht eines solchen Nasswäschers,
- Figur 3: eine Seitenansicht eines Demisters mit gewelltem Filterpaket,
- Figur 4: eine Vorderansicht des Filterpaketes nach Figur 3,
- Figur 5: einen schematisch dargestellten Wassertank,
- Figur 6: eine Vorder- und eine Seitenansicht eines Filters bzw. eines Gesamtpaketes bzw. zwei aneinander angefügte Gesamtpakete,
- Figur 7: eine verkleinerte Wiedergabe des Nasswäschers nach Figur 1 mit entgegen der Wetterrichtung schräg gestelltem Demister und
- Figur 8: eine Teilansicht des Nasswäschers mit in Richtung Wetterrichtung schräg gestelltem Demister.

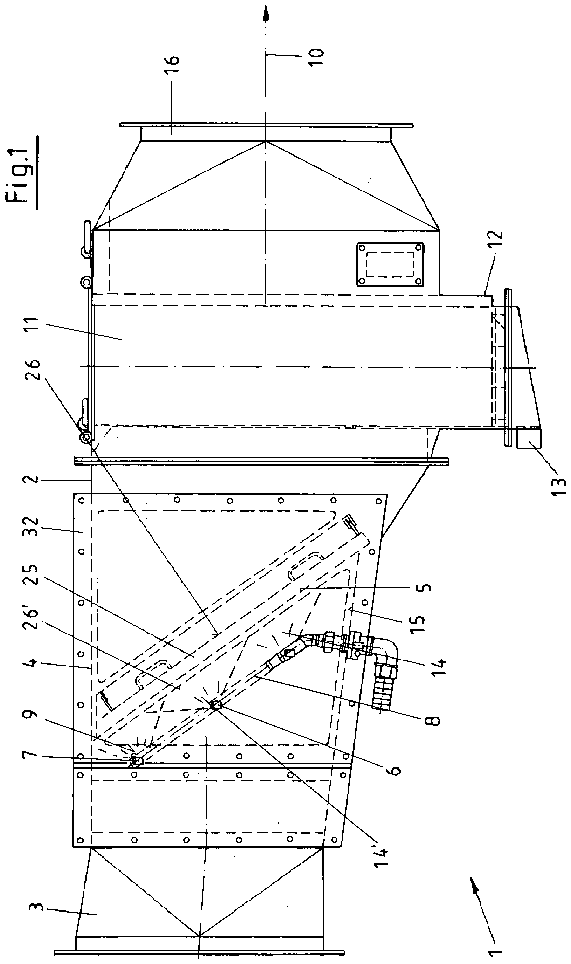

Bei dem in Figur 1 wiedergegebenen Nasswäscher 1 ist das Wäschergehäuse 2 im Bereich des Demisters 5 geöffnet wiedergegeben, im übrigen Bereich dagegen geschlossen. An den Wettereinlaufstutzen 3 schließt sich demnach das Demisterteilgehäuse 4 mit dem Demister 5 an, wobei die über die Befeuchtungsdüsen 6, 7 befeuchteten staubhaltigen Wetter anschließend in Wetterrichtung geführt in den Tropfenfänger 11 gelangen, dessen Tropfenfängerteilgehäuse 12 einen schräg ausgebildeten Boden aufweist, an den sich der Schmutzwasserablauf 13 anschließt.

Nicht erkennbar ist in Figur 1, dass die Oberfläche 26 des Filterpaketes 25 des Demisters 5 gewellt ausgebildet ist. Dies ergibt sich aus den weiteren Figuren um so deutlicher. Die auf die Gegenoberfläche 26' des Demisters 5 gerichteten Befeuchtungsdüsen 6, 7 sind einem Düsenrahmen 8 zugeordnet und so angeordnet, dass ihre Düsenöffnungen 9 auf den Demister 5 weisen. Angedeutet ist hier bei Figur 1 weiter, dass die von den Befeuchtungsdüsen 6, 7 erzeugten Befeuchtungskegel 14, 14' sich kurz vor Erreichen der Oberfläche 26' des Demisters 5 überlappen. Dadurch ist sichergestellt, dass auch wirklich alle auf den Demister 5 auftreffenden Staubpartikel mit Wasser befeuchtet und in die Wassertropfen eingebunden werden.

An das Tropfenfängerteilgehäuse 12 schließt sich das hier nur angedeutete Gehäuse des Lüfters 16 an.

Aus Figur 1 ist ersichtlich, dass das Bodenblech 15 des Demisterteilgehäuses 4 in Richtung Tropfenfänger 11 geneigt ausgebildet ist, sodass das staubhaltige oder schlammhaltige Wasser sicher das Demisterteilgehäuse 4 verlässt und ins Tropfenfängerteilgehäuse 12 strömt, um dieses dann über den Schmutzwasserablauf 13 zu verlassen.

Angedeutet sind im Bereich des Demisterteilgehäuses 4, dass dessen Rand zahlreiche Schraublöcher aufweist. Über diese Schraublöcher wird die hier nicht wiedergegebene Gehäusetür 32 aufgebracht, um so das Demisterteilgehäuse 4 zu verschließen und dabei gleichzeitig den Demister 5 wirksam festzulegen.

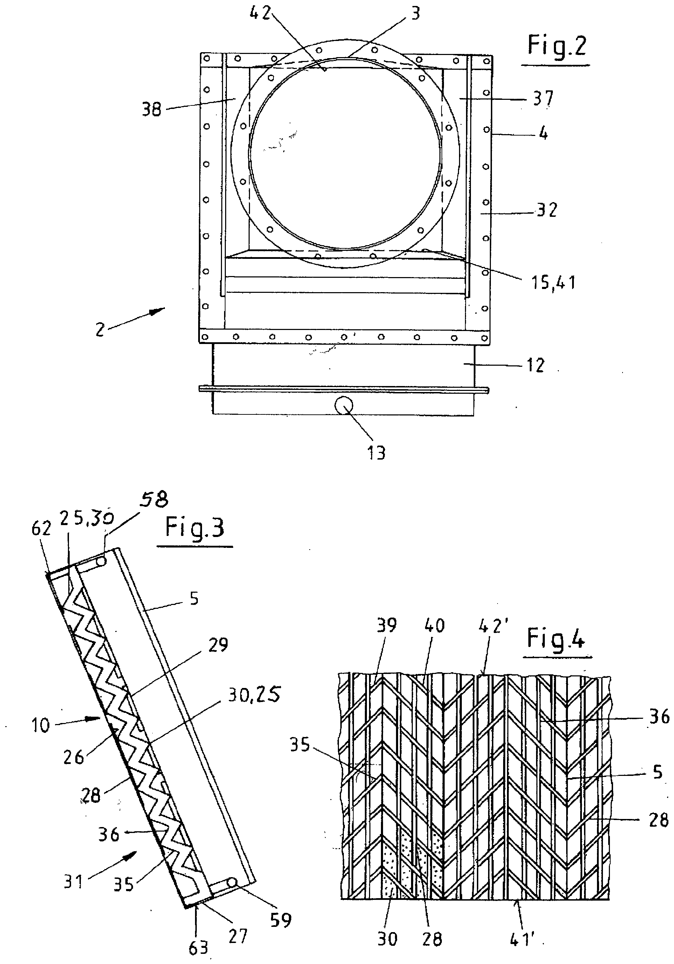

Figur 2 zeigt das Wäschergehäuse 2 vom Einströmbereich der staubhaltigen Wetter gesehen, wobei deutlich wird, dass der Wettereinlaufstutzen 3 kreisrund ist, weil hier Wetterlutten angeschlossen werden müssen. Dieser runde Wettereinlaufstutzen 3 geht in das kastenförmige Demisterteilgehäuse 4 über, wobei erkennbar ist, dass das Bodenblech 15 bzw. der Teilgehäuseboden 41 geneigt ist und zwar in Blickrichtung. Mit 32 ist die Gehäusetür bezeichnet, die eine Gehäusewand 37 darstellt. Die gegenüberliegende Gehäuseseitenwand ist mit 38 bezeichnet. Während der Teilgehäuseboden das Bezugszeichen 41 trägt, weist der Teilgehäusedeckel das Bezugszeichen 42 auf.

Eine Seitenansicht des Demisters 5 zeigt Figur 3. Hier ist gut erkennbar, dass das Filterpaket 25 wellenförmig ausgebildet ist. Der Stützrahmen 27 trägt zwei Stützgitter 28, 29 für das Filterpaket 25, wobei diese Stützgitter 28, 29 ebenso wellenförmig ausgebildet sind, wie auch das eigentliche Filterpaket 25. Als Filtermaterial 30 ist hier nicht erkennbar eine Stahlwolle verwendet, wobei diese Stahlwolle zu einem Stahlwollepaket geformt ist, das als Filterpaket 25 bezeichnet ist. Stützrahmen 27 mit Stützgitter 28, 29 und Filterpaket 25 bilden ein Gesamtpaket 31, dessen Handhabung bzw. dessen Montage und Demontage dadurch erleichtert wird, dass seitlich Handgriffe 58, 59 vorgesehen sind. Die hier vom Filterpaket 25 gebildeten Wellen sind mit 35 und 36 gekennzeichnet. Diese Wellen 35, 36 laufen mit ihren Wellenkämmen 39, 40 so, dass sie wie Figur 4 zeigt vom Teilgehäuseboden 41 zum Teilgehäusedeckel 42 laufen oder umgekehrt. Hier bei Figur 4 wird deutlich, dass auch die Stützgitter 28, 29 die Wellen 35, 36 bzw. Wellenkämme 39, 40 mit bilden. Das dazwischen gefüllte Filtermaterial 30 erhält damit die Wellenform automatisch beim Einpressen zwischen die beiden Stützgitter 28, 29, oder es wird zusammen mit dem Stützgitter 28, 29 entsprechend geformt.

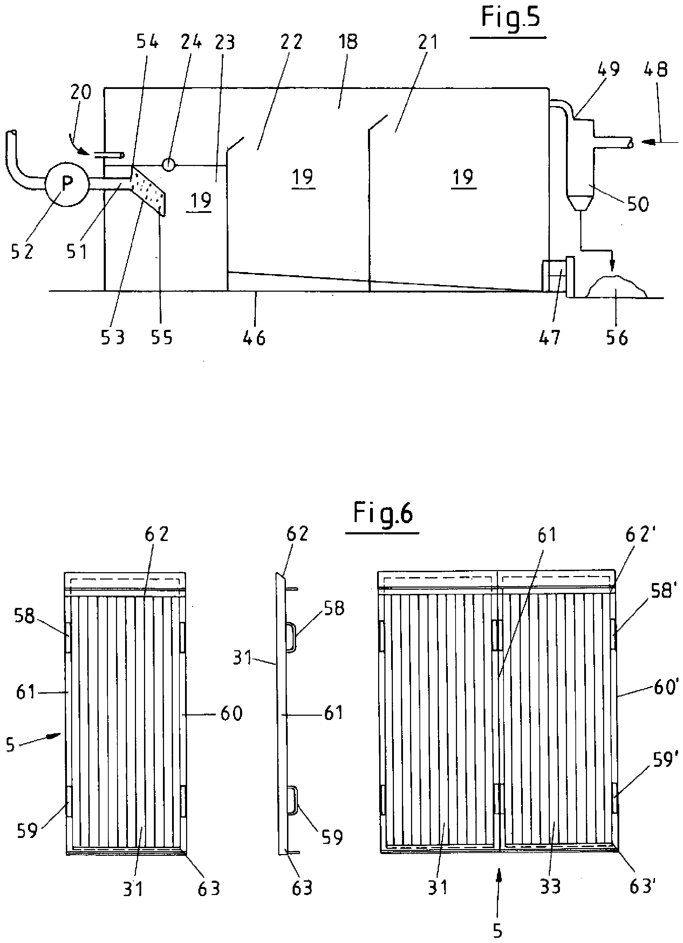

Figur 5 zeigt den Wassertank 18, in den das schmutzhaltige, d. h. staubhaltige Wasser hineingeleitet wird. Bevor das Kreislaufwasser 19 in die erste Kaskade 21 eingefüllt wird, durchläuft es einen Schlammvorabscheider 49 in Form eines Hydrozyklons 50. Dies bedeutet, dass bereits zum Teil gesäubertes Schmutzwasser als Kreislaufwasser 19 in die Kaskaden 21, 22, 23 gelangt, um dann eventuell ergänzt über den Frischwasserzulauf 20 verlassendes Wasser ergänzt zu werden. Dieser Frischwasserzulauf 20 ist mit einem Schwimmer 24 ausgerüstet, der bei Unterschreiten eines bestimmten Wasserspiegels dafür sorgt, dass Frischwasser hinzugeführt wird.

Der den Hydrozyklon 50 verlassende Schlamm ist mit 56 bezeichnet. Er wird zusammen mit dem den Schlammablauf 47 verlassenden Schlamm weiter verwertet. Dieser Schlamm wird aus dem Wassertank 18 abgeleitet, wozu der Tankboden 46 wie aus Figur 5 ersichtlich schräg gestellt ist. Der Schlamm rutscht also quasi automatisch in Richtung Schlammablauf 47.

Der Schmutzwasserzulauf ist mit dem Bezugszeichen 48 versehen, der Reinwasserablauf auf der gegenüberliegenden Seite des Wassertanks 18 mit 51. Hier sorgt eine Pumpe 52 dafür, dass das Wasser aus der letzten Kaskade 23 herausgepumpt wird, wozu ein Ansauger 53 dient, dessen Zulauf 54 mit einem feinmaschigen Drahtgewebe 55 abgedeckt ist.

Zur weiteren Erläuterung des Demisters 5 ist in Figur 6 einmal ein Gesamtpaket 31 wiedergegeben, das auf der rechten Seite mit einem weiteren Gesamtpaket 33 zu einem Demister 5 zusammengefügt ist. Erkennbar ist, dass am oberen Rahmenrand 62 und am unteren Rahmenrand 63 die schon erwähnten Handgriffe 58, 59 vorgesehen sind und zwar sowohl an der Längsseite 60 wie auch an der Längsseite 61. Damit kann ein solches Gesamtpaket 31 bzw. 33 gut transportiert und auch montiert werden, wobei die Seitenansicht mittig zwischen den beiden Darstellungen verdeutlicht, dass das gesamte Gesamtpaket 31, 33 sehr schmal baut. Damit kann es sowohl von der geringen Kantenhöhe und auch wegen der geringen sonstigen Abmessungen auch unter beengten Verhältnissen im untertägigen Bergbau beispielsweise in Auffahrstrecken gut montiert und auch demontiert werden, d. h. in das Wäschergehäuse 2 hineingebracht, vor allem hinein geschoben und dann über das Aufbringen der Gehäusetür 32 so zusammengepresst werden, wie es auf der rechten Seite von Figur 6 wiedergegeben ist.

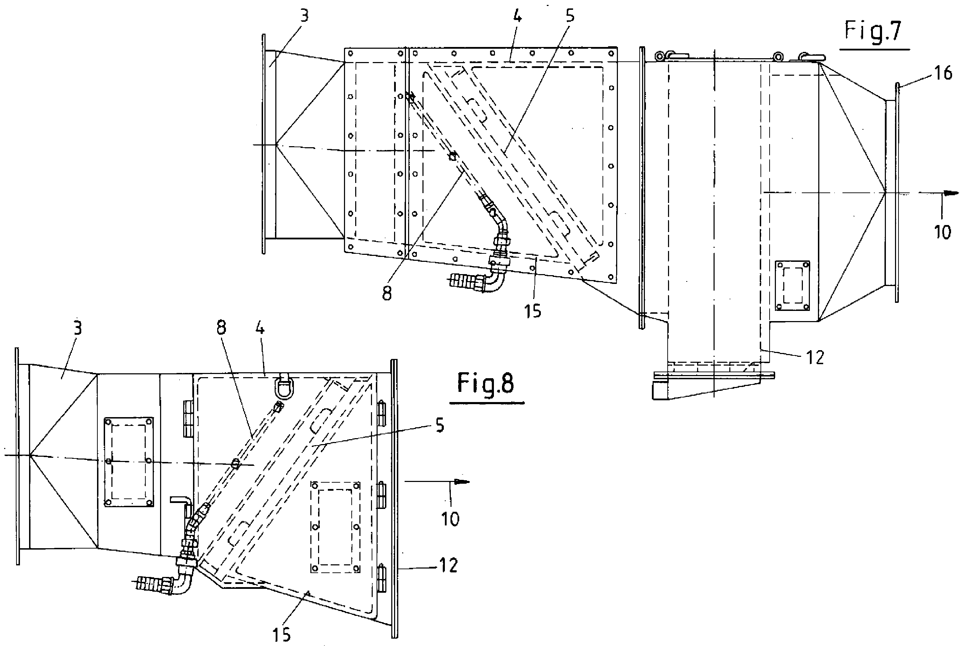

Die Figuren 7 und 8 sollen verdeutlichen, dass der Demister 5 sowohl entgegen der Wetterrichtung 10 (Figur 7) wie auch in Wetterrichtung 10 geneigt angeordnet werden kann. Figur 8, die letztere Neigung zeigt, verdeutlicht noch einmal, wie schräg gestellt der Teilgehäuseboden 41 bzw. sein Bodenblech 15 ausgebildet ist, um das Abführen des durchfeuchteten Schlamms bzw. Schlammwassers sicherzustellen.

## Patentansprüche

1. Nasswäscher für den Einsatz im untertägigen Berg- und Tunnelbau im Rahmen der Staubbekämpfung, mit einem Wäschergehäuse (2) mit zugeordnetem Lüfter (16) und einem mit Befeuchtungsdüsen (6, 7) versehenen und ein Filterpaket (25) aufweisenden Demister (5) sowie nachgeordnetem Tropfenfänger (11) und Wassertank (18) mit ventilgesteuertem Frischwasserzulauf (20) für Kreislaufwasser (19),
**dadurch gekennzeichnet,**
**dass** der Demister (5) einen Stützrahmen (27) und darin in Wetterrichtung (10) im Abstand angeordnete Stützgitter (28, 29) aufweist, zwischen die als Filtermaterial (30) Stahlgewebe oder Stahlgeflecht oder Stahlwolle oder Streckmetalllagen, ein kompaktes Filterpaket (25) darstellend, eingebracht ist, wobei die Stützgitter (28, 29) und damit auch das Filtermaterial (30) und das Filterpaket (25) ein wellenförmig gebogenes oder gekantetes Gesamtpaket (31) ergebend ausgebildet sind.

2. Nasswäscher nach Anspruch 1,
**dadurch gekennzeichnet,**
**dass** der Demister (5) mehrteilig ausgebildet ist, wobei zwei oder mehrere Gesamtpakete (31, 33) quer zur Wetterrichtung (10) aneinandergefügt ins Wäschergehäuse (2) und über eine zu schließende Gehäusetür (32) zugefügt und -gepresst sind.

3. Nasswäscher nach Anspruch 1,
**dadurch gekennzeichnet,**
**dass** die von den Stützgittern (28, 29) und dem Filtermaterial (30) gebildeten Wellen (35, 36) von Gehäuseseitenwand (37) zu Gehäuseseitenwand (38) verlaufend ausgeführt sind, so dass dementsprechend die Wellenkämme (39, 40) vom Teilgehäuseboden (41) zum Teilgehäusedeckel (42) bzw. umgekehrt verlaufen.

4. Nasswäscher nach Anspruch 1,
**dadurch gekennzeichnet,**
**dass** der Demister (5) ein Bodenblech (15) aufweist, das in Richtung Tropfenfänger (11) schräggestellt ist, dem ein Schmutzwasserablauf (13) zugeordnet ist.

5. Nasswäscher nach Anspruch 1,
**dadurch gekennzeichnet,**
**dass** der Wassertank (18) eine oder mehrere Kaskaden (21, 22, 23) aufweist, dass der Tankboden (46) in Richtung Schlammablauf (47) schräggestellt ist und dass dem Schmutzwasserzulauf (48) ein Schlammvorabschneider (49), vorzugsweise ein Hydrozyklon (50) zugeordnet ist.

## Claims

1. Wet scrubber for use in underground mining and tunnelling as part of dust control, with a scrubber housing (2) with an associated fan (16) and a damping nozzle (6, 7) and a filter package (25) having a demister (5) as well as a downstream drop catcher (11) and water tank (18) with valve-controlled fresh water supply (20) for circulating water (19),
**characterised in that**
the demister (5) has a support frame (27) and therein support grilles (28, 29) arranged at a distance in the mine air direction (10), between which steel mesh or steel braid or steel wool or stretch metal layers are inserted as a filter material (30), representing a compact filter package (25), whereby the support grilles (28, 29) and thus also the filter material (30) and the filter package (25) are designed to form a wave-shaped curved or tilted overall package (31).

2. Wet scrubber in accordance with claim 1,
**characterised in that**
the demister (5) is multi-part, whereby two or more complete packages (31, 33) are joined together in the scrubber housing (2) transverse to the mine air direction (10) and connected and pressed shut via a housing door (32) to be closed.

3. Wet scrubber in accordance with claim 1,
**characterised in that**
that the corrugations (35, 36) formed by the support grids (28, 29) and the filter material (30) are designed running from housing side wall (37) to housing side wall (38), so that the crests (39, 40) run accordingly from the partial housing bottom (41) to the partial housing cover (42) or vice versa.

4. Wet scrubber in accordance with claim 1,
**characterised in that**
the demister (5) has a bottom plate (15) that is slanted in the direction of a drop catcher (11), to which a dirty water drain (13) is assigned.

5. Wet scrubber in accordance with claim 1,
**characterised in that**
the water tank (18) has one or more cascades (21, 22, 23), that the tank bottom (46) is slanted in the direction of the sludge drain (47) and that a sludge pre-separator (49), preferably a hydrocyclone (50) is assigned to the dirty water inlet (48).

## Revendications

1. Laveur humide pour l'utilisation dans l'exploitation minière et la construction de tunnels dans le cadre de la lutte contre la poussière, avec un boîtier de laveur (2) doté d'un ventilateur attribué (16) et d'un dispositif antibuée (5) doté de tuyères d'humidification (6, 7) et présentant un paquet de filtrage (25) ainsi qu'un collecteur de gouttes (11) disposé en aval et d'un réservoir d'eau (18) avec alimentation en eau fraîche (20) pour de l'eau en circuit (19) commandée par vanne,
**caractérisé en ce que**
le dispositif antibuée (5) présente un cadre de soutien (27) et dans ce dernier des grilles de protection (28, 29) de façon espacée dans le sens des intempéries (10), entre lesquelles est disposé en tant que matériau de filtrage (30) du tissu en acier ou un tressage d'acier ou de la laine d'acier ou des couches de métal déployé, présentant un paquet de filtrage (25) compact, dans lequel les grilles de soutien (28, 29) et par conséquent aussi le matériau de filtrage (30) et le paquet de filtrage (25) sont formés afin de donner un paquet complet (31) courbé de façon ondulée ou plié.

2. Laveur humide selon la revendication 1,
**caractérisé en ce que**
le dispositif antibuée (5) est constitué de plusieurs pièces, dans lequel deux ou plusieurs paquets complets (31, 33) sont disposés bout à bout dans le boîtier de laveur (2) perpendiculairement au sens des intempéries (10), adjoints et pressés par l'intermédiaire d'une porte de boîtier (32) devant être fermée.

3. Laveur humide selon la revendication 1,
**caractérisé en ce que**
les ondulations (35, 36) formées par les grilles de soutien (28, 29) et le matériau de filtrage (30) sont formées de façon à courir de paroi latérale du boîtier (37) à paroi latérale du boîtier (38), de manière à ce de la même façon les crêtes d'ondulation (39, 40) aille du fond partiel du boîtier (41) jusqu'au couvercle partie du boîtier (42) et inversement.

4. Laveur humide selon la revendication 1,
**caractérisé en ce que**
le dispositif antibuée (5) présente une tôle de fond (15) qui est placée en biais dans le sens du collecteur de gouttes (11), auquel un écoulement d'eaux usées (13) est attribué.

5. Laveur humide selon la revendication 1,
**caractérisé en ce que**
le réservoir d'eau (18) présente une ou plusieurs cascades (21, 22, 23), que le fond du réservoir (46) est placé en biais dans le sens de l'écoulement de la boue (47) et qu'un pré-séparateur de boues (49), de préférence un hydrocyclone (50), est attribué à l'alimentation en eaux usées (48).
